# EUROPÄISCHE PATENTSCHRIFT

(11) **EP 4 061 647 B1**
(45) Veröffentlichungstag und Bekanntmachung des Hinweises auf die Patenterteilung: **06.12.2023**
(21) Anmeldenummer: 20792369.9
(22) Anmeldetag: 13.10.2020
(51) Int. Cl.: B60C 11/03, B60C 11/12

(54) **FAHRZEUGLUFTREIFEN**
PNEUMATIC TYRE
PNEUMATIQUE

(30) Priorität: 19.11.2019 DE 102019217819
(43) Veröffentlichungstag der Anmeldung: 28.09.2022
(73) Patentinhaber: Continental Reifen Deutschland GmbH, 30165 Hannover (DE)
(72) Erfinder: HÄRTWIG, Andreas, 30165 Hannover (DE); SCHWENKE, Andreas, 30165 Hannover (DE); KRISTEN, Florian, 30165 Hannover (DE); MEIER, Nico, 30165 Hannover (DE); WÜST, Alexander, 30165 Hannover (DE); NEUBER, Cord-Christian, 30165 Hannover (DE)
(74) Vertreter: Continental Corporation
(86) Internationale Anmeldenummer: PCT/EP2020/078743
(87) Internationale Veröffentlichungsnummer: WO 2021/099032

(56) Entgegenhaltungen:
- WO-A1-94/21478
- WO-A1-2017/040007
- WO-A1-2017/176280
- US-A1- 2015 053 320

## Beschreibung

Die Erfindung betrifft einen Fahrzeugluftreifen, insbesondere Nutzfahrzeugreifen, mit einem Laufstreifen, welcher eine laufrichtungsgebunden ausgeführte Profilierung mit in Umfangsrichtung umlaufenden schulterseitigen und mittleren Profilrippen aufweist, wobei zumindest eine der mittleren Profilrippen, welche insbesondere eine entlang des Reifenäquators verlaufende Profilrippe ist, in axialer Richtung von Einschnitten mit einer Breite von 0,5 mm bis 1,2 mm durchquert ist, welche jeweils einen zentralen Abschnitt, in welchem der Einschnitt in seiner Erstreckungsrichtung in Wellenform verläuft, und zwei seitliche Abschnitte aufweisen,
wobei sich die Einschnitte in Draufsicht in Bogenform und bezüglich der Mittellinie der Profilrippe symmetrisch erstrecken und in den seitlichen Abschnitten sowie im zentralen Abschnitt eine einheitliche und in radialer Richtung verlaufende Wellenform aufweisen, welche lediglich im zentralen Abschnitt der Einschnitte von der in der Erstreckungsrichtung der Einschnitte vorliegenden Wellenform überlagert ist.

Ein derartiger Nutzfahrzeugreifen ist beispielsweise aus der WO 2017 040 007 A1 bekannt. Dieser Reifen weist einen Laufstreifen mit laufrichtungsgebunden ausgeführter Profilierung mit fünf Profilrippen auf. Die entlang des Reifenäquators verlaufende, mittlere Profilrippe ist in axialer Richtung von Einschnitten durchquert, wobei jeder Einschnitt einen zentralen Abschnitt, in welchem der Einschnitt in seiner Erstreckungsrichtung in Form einer Trapezwelle verläuft, und zwei seitliche Abschnitte aufweist. Ferner erstrecken sich die Einschnitte in Draufsicht in Bogenform und bezüglich der Mittellinie der Profilrippe symmetrisch, wobei die Einschnitte vorzugsweise eine in radialer Richtung verlaufende Wellenform aufweisen. Der Nutzfahrzeugreifen soll unter Beibehaltung seiner Nässeperformance und seines Abriebwiderstands einen gleichmäßigen Laufstreifenabrieb aufweisen.

Aus der US 2015/0053320 A1 ist ein Fahrzeugluftreifen mit einem Laufstreifen mit Profilblöcken, in welchen in Draufsicht in axialer Richtung verlaufende Einschnitte ausgebildet sind, bekannt. Jeder Einschnitt ist im Inneren des jeweiligen Profilblocks von einem insgesamt flach U-förmig verlaufenden Kanal umlaufen, sodass der Einschnitt über seine gesamte Erstreckung in den Kanal einmündet, wobei jeder Einschnitt, in Draufsicht betrachtet, einen zentralen Abschnitt, in welchem der Einschnitt in seiner Erstreckungsrichtung in Wellenform verläuft, und zwei seitliche Abschnitte aufweist. Die Wellenform im zentralen Abschnitt verläuft in radialer Richtung ein Stück in den Einschnitt hinein, wobei an die Wellenform eine Verkeilungsstruktur aus an den Einschnittwänden ausgebildeten, kuppelförmigen Vorsprüngen und korrespondierenden Vertiefungen anschließt. Die die Einschnitte ausformenden Lamellen sollen sich bei Entnahme des Reifens aus der Vulkanisationsform auf einfache Weise aus dem Laufstreifen herausziehen lassen.

Die WO 94/21478 A1 offenbart einen Fahrzeugluftreifen mit einem Laufstreifen mit Profilblöcken mit Einschnitten, welche sowohl in Draufsicht als auch im Querschnitt betrachtet, zick-zack-förmig verlaufen, wodurch gute Griffeigenschaften auf vereister, verschneiter und nasser Fahrbahn erzielt werden sollen.

Ferner ist aus der WO 2017/177132 A1 ein Nutzfahrzeugreifen mit einem Laufstreifen bekannt, welcher sechs in Umfangsrichtung umlaufende Profilrippen, zwei weitgehend unstrukturierte schulterseitige Profilrippen und vier im mittleren Bereich zwischen den schulterseitigen Profilrippen verlaufende mittlere Profilrippen aufweist. In den vier mittleren Profilrippen sind unter relativ großen, gegenseitigen Abständen Einschnitte derart ausgebildet, dass sie insgesamt V-förmig über sämtliche Profilrippen verlaufen, wobei sich die Spitzen der V-Form im Bereich einer Umfangsrille an der zentralen Mittelumfangslinie des Laufstreifens befindet. Dieser bekannte Nutzfahrzeugreifen weist daher ein laufrichtungsgebunden gestaltetes Profil auf. Die Einschnitte besitzen jeweils zentrale Abschnitte, welche in der Erstreckungsrichtung der Einschnitte in einer Wellenform verlaufen.

Die Einschnitte in den Profilrippen der Laufstreifen von Nutzfahrzeugreifen sollen gute Griffeigenschaften, eine gute Wasserableitung auf nassem Untergrund und gute Nassbremseigenschaften unterstützen. Die üblicherweise vorgesehenen, sich gerade erstreckenden, wellenförmig verlaufenden Einschnitte beeinflussen die für einen geringen Abrieb erforderliche Profilsteifigkeit in Umfangs- als auch in Querrichtung derart, dass sie einen ungleichförmigen Abrieb, welcher als "Heel and Toe Wear" bekannt ist, verursachen. Die Beweglichkeit der Profilrippen trägt zudem zur Geräuschemission des Reifens bei. Ein weiteres Problem derartiger Einschnitte stellt die Gefahr des Eindringens von Steinen dar, wodurch es zu Beschädigungen bzw. Einrissen im Gummimaterial, insbesondere am Einschnittgrund, kommen kann.

Der Erfindung liegt somit die Aufgabe zugrunde, einen Nutzfahrzeugreifen der eingangs genannten Art derart zu gestalten, dass bei Beibehalt der ursprünglichen Funktion der Einschnitte im Laufstreifen ein geringerer und gleichmäßiger Abrieb sowie eine geringere Geräuschemission erzielt werden und die Empfindlichkeit der Einschnitte hinsichtlich des Verfangens von Steinen deutlich herabgesetzt ist.

Gelöst wird die gestellte Aufgabe erfindungsgemäß dadurch, dass die in der Erstreckungsrichtung des Einschnittes vorliegende Wellenform aus zwei zick-zack-förmig verlaufenden Bereichen besteht, die in der Einschnittmitte mittels eines sich in Draufsicht in axialer Richtung und gerade erstreckenden Verbindungsabschnittes miteinander verbunden sind.

Über seine gesamte Erstreckung weist somit jeder Einschnitt eine Wellenform in radialer Richtung auf, welche vor allem ein Eindringen von Steinen bis zum Rillengrund verhindert. Im zentralen Abschnitt überlagert sich die in radialer Richtung vorliegende Wellenform mit der in axialer Richtung vorliegenden Wellenform und bewirkt Flächenelemente an den Einschnittwänden, die für eine stabilisierende gegenseitige Abstützung der Einschnittwände unter Belastung sorgen, sodass die Umfangs- und die Quersteifigkeit der Profilrippe, in welcher solche Einschnitte ausgebildet sind, derart erhöht ist, dass ein geringer und gleichmäßiger Laufstreifenabrieb unterstützt und die Geräuschemission reduziert werden. Ein gleichmäßiger Laufstreifenabrieb wird insbesondere dadurch unterstützt, dass die in der Erstreckungsrichtung des Einschnittes vorliegende Wellenform aus zwei zick-zack-förmig verlaufenden Bereichen besteht, die in der Einschnittmitte mittels eines sich in Draufsicht in axialer Richtung und gerade erstreckenden Verbindungsabschnittes miteinander verbunden sind.

Der erwähnte Abstützeffekt ist besonders vorteilhaft und ausgeprägt, wenn der zentrale Abschnitt des Einschnittes 50 % bis 80 % der Erstreckungslänge des Einschnittes einnimmt.

Um ein Eindringen von Steinen bis zum Rillengrund besonders wirkungsvoll zu verhindern, ist es ferner vorteilhaft, wenn die in radialer Richtung vorliegende Wellenform über zumindest 70 % der radialen Erstreckung des Einschnittes verläuft.

Für eine gleichmäßige Stabilisierung der Profilrippe ist es ferner vorteilhaft, wenn die in radialer Richtung vorliegende Wellenform sinusförmig oder sinusformähnlich ist und wenn die in der Erstreckungsrichtung des Einschnittes vorliegende Wellenform zick-zack-förmig ist, wobei diese Wellenformen bevorzugt gleichmäßige Wellenformen sind.

Für eine besonders effektive gegenseitige Abstützung der Einschnittwände ist es darüber hinaus von Vorteil, wenn die in radialer Richtung vorliegende Wellenform eine kleinere Wellenlänge, insbesondere eine um mindestens 30 % und um bis zu 60 % kleinere Wellenlänge, aufweist als die in der Erstreckungsrichtung des Einschnittes vorliegende Wellenform.

Dabei ist es ferner bevorzugt, wenn die in radialer Richtung vorliegende Wellenform eine Wellenlänge aufweist, welche 20 % bis 50 % der größten in radialer Richtung vorliegenden Tiefe des Einschnittes beträgt und wenn die in der Erstreckungsrichtung des Einschnittes vorliegende Wellenform eine Wellenlänge aufweist, welche 8,0 mm bis 11,0 mm beträgt.

Besonders bevorzugt ist eine Ausführung, bei welcher die in radialer Richtung vorliegende Wellenform und die in der Erstreckungsrichtung des Einschnittes vorliegende Wellenform jeweils eine Amplitude aufweisen, welche 0,8 mm bis 1,2 mm insbesondere etwa 1,0 mm, beträgt.

Besonders vorteilhaft ist ferner eine Ausführung, bei welcher der Einschnitt einen im Querschnitt runden, insbesondere kreisbogenförmig gerundeten, Einschnittgrund aufweist, welcher in Draufsicht auf den Einschnitt entlang bzw. gemäß der Bogenform des Einschnittes verläuft und im Querschnitt eine größte Breite bzw. einen größten Durchmesser aufweist, welcher größer ist als die sonstige Breite des Einschnittes. Dabei beträgt die größte Breite bzw. der größte Durchmesser des Einschnittgrundes im Querschnitt 1,0 mm bis 4,0 mm. Ein derart ausgestalteter Einschnittgrund wirkt der Gefahr des Entstehens von Einrissen in diesem ansonsten heiklen Bereich wirkungsvoll entgegen.

Weitere für einen gleichmäßigen Abrieb vorteilhafte Maßnahmen bestehen darin, dass der Einschnitt ausgehend von der Laufstreifenperipherie einen in radialer Richtung verlaufenden Randabschnitt mit einer in radialer Richtung vorliegenden Breite von 1,5 mm bis 2,5 mm aufweist und dass der Einschnitt zum Einschnittgrund einen Übergangsabschnitt aufweist, in welchem die Wellenformen verschwinden.

Weitere Merkmale, Vorteile und Einzelheiten der Erfindung werden nun anhand der Zeichnung, die schematisch ein Ausführungsbeispiel der Erfindung darstellt, näher beschrieben. Dabei zeigen
Fig. 1 einen Umfangsabschnitt einer Profilrippe eines Laufstreifens eines Nutzfahrzeugreifens,
Fig. 2 eine Schrägansicht eines Profilblockes aus Fig. 1,
Fig. 3 eine Schrägansicht eines Formelementes zur Ausbildung eines Einschnittes im Profilblock gemäß Fig. 2 und
Fig. 4 einen Ausschnitt des Formelementes aus Fig. 3 in vergrößerter Darstellung.

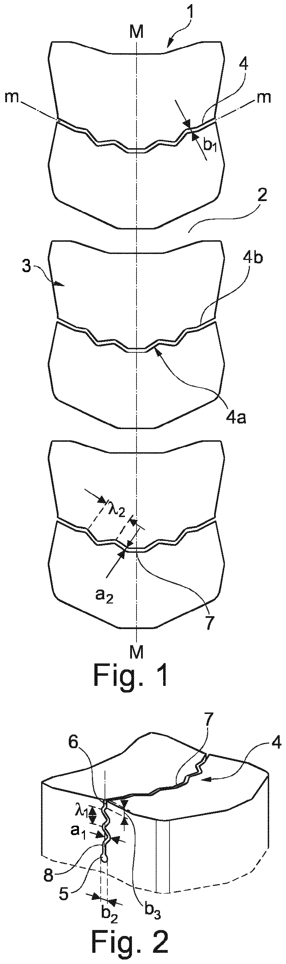

Fig. 1 zeigt einen Umfangsabschnitt einer zentralen Profilrippe 1 eines eine laufrichtungsgebundene Profilierung aufweisenden Laufstreifens eines Fahrzeugluftreifens, insbesondere eines Nutzfahrzeugreifens, welcher bevorzugt ein LKW-Reifen oder ein Busreifen radialer Bauart ist. Die Profilrippe 1 im Beispiel umläuft den Laufstreifen entlang des Reifenäquators, weist entlang des Reifenäquators ihre Mittellinie M-M auf und ist durch Querrillen 2 in Profilblöcke 3 gegliedert. Der Laufstreifen weist seitlich der Profilrippe 1 weitere, nicht dargestellte Profilrippen auf, wobei insgesamt drei bis sieben Profilrippen, die voneinander durch in Umfangsrichtung umlaufende Umfangsrillen getrennt sind, vorgesehen sind. Alternativ weist der Laufstreifen entlang des Reifenäquators eine Umfangsrille und zwei zentrale Profilrippen seitlich der Umfangsrille auf.

In jedem Profilblock 3 der zentralen Profilrippe 1 ist im mittleren Bereich jeweils ein Einschnitt 4 ausgebildet. Die Querrillen 2 und die Einschnitte 4 verlaufen im Wesentlichen parallel zueinander, ferner bogenförmig und bezüglich der Mittellinie M-M symmetrisch. Weitere, die Profilierung bildende Rillen, beispielsweise ebenfalls Querrillen, in sonstigen vorgesehenen Profilrippen verlaufen derart, dass insgesamt ein laufrichtungsgebunden gestalteter Laufstreifen vorliegt, sodass ein Fahrzeugluftreifen mit einem solchen Laufstreifen derart am Fahrzeug zu montieren ist, dass bei Vorwärtsfahrt die Querrillen 2 und die Einschnitte 4 mit ihrer Rundungsmitte zuerst in den Untergrund eintreten.

Die Ausgestaltung der zentralen Profilrippe 1 kann auch auf andere Weise unter Beibehaltung der Laufrichtungsgebundenheit erfolgen, beispielsweise mit mittig unterbrochenen Querrillen. Die Profilrippe 1 kann ferner auch derart gestaltet sein, dass sie lediglich Einschnitte 4 und keine Querrillen aufweist, daher eine weitgehend geschlossen ausgeführte Profilrippe ist.

Wie noch im Detail beschrieben wird, weist jeder Einschnitt 4 einen im Querschnitt gerundeten Einschnittgrund 5 auf, welcher in der axialen Erstreckung des Einschnittes 4 einer Bogenform angenähert verläuft, die insbesondere annähernd ein Kreisbogen mit einem Radius von 28,0 mm bis 35,0 mm ist. Jeder Einschnitt 4 weist zwei in radialer Richtung gleichgestaltete seitliche Abschnitte 4b und einen zwischen diesen befindlichen zentralen Abschnitt 4a auf. Entlang der entsprechend und im Wesentlichen bogenförmig verlaufenden zentralen Linie m des Einschnittes 4 betrachtet, erstreckt sich der zentrale Abschnitt 4a über 50 % bis 80 % der Länge der Linie m, jeder seitliche Abschnitt 4b daher über 10 % bis 25 %.

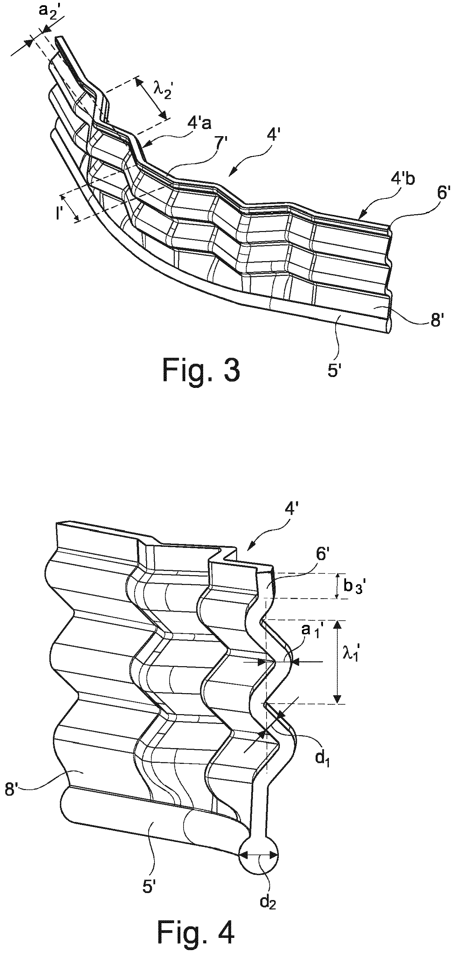

Die besondere Ausgestaltung des Einschnittes 4 im zentralen Abschnitt 4a und den seitlichen Abschnitten 4b wird nachfolgend anhand eines in Fig. 3 dargestellten Formelementes 4`, des in Fig. 4 dargestellten vergrößerten Ausschnittes des Formelementes 4' sowie anhand der Fig. 2 näher erläutert. Vom Formelement 4' ist lediglich jener Teil gezeigt, der bei der Vulkanisation des Fahrzeugluftreifens in einer Reifenvulkanisationsform den Einschnitt 4 ausformt. Wie allgemein bekannt ist, werden Formelemente mittels Verankerungsabschnitten (nicht dargestellt) in jenen Formteilen der Reifenvulkanisationsform verankert, beispielsweise eingegossen, welche während der Vulkanisation die Profilierung des Laufstreifens ausformen. Das Formelement 4' weist entsprechend der Ausgestaltung des Einschnittes 4 einen zentralen Abschnitt 4'a und seitliche Abschnitte 4'b auf sowie ein den Einschnittgrund 5 ausformendes, im Wesentlichen bogenförmig verlaufendes Randelement 5', welches einen runden, insbesondere kreisrunden Querschnitt besitzt. Das Randelement 5' weist einen Durchmesser d₂ auf, welcher 1,0 mm bis 4,0 mm, insbesondere 1,5 mm bis 3,5 mm, bevorzugt 2,0 mm, beträgt und um mindestens 0,2 mm größer ist als die insbesondere konstante Stärke d₁ von 0,5 mm bis 1,2 mm des Formelementes 4' in seinem sonstigen Bereich. Der gegenüber dem Randelement 5' befindliche Rand des Formelementes 4' weist einen Randabschnitt 6` auf, welcher in radialer Richtung verläuft und in dieser Richtung eine Breite b₃' von 1,5 mm bis 2,5 mm aufweist.

Der Einschnitt 4 weist somit eine Einschnittbreite b₁ entsprechend der Stärke d₁ des Formelementes 4' von ebenfalls 0,5 mm bis 1,2 mm, insbesondere 0,8 mm, auf. Der im Querschnitt runde Einschnittgrund 5 des Einschnittes 4 verläuft wie die zentrale Linie m und weist eine Breite b₂ entsprechend dem Durchmesser d₂ des Randelementes 5' auf. An der Laufstreifenperipherie beginnt der Einschnitt 4 mit einem Randabschnitt 6 entsprechend dem Randabschnitt 6' des Formelementes 4', wobei der Randabschnitt 6 in radialer Richtung verläuft und eine in radialer Richtung vorliegende Breite b₃ von 1,5 mm bis 2,5 mm aufweist.

Das Formelement 4' weist über zumindest 70% seiner radialen Erstreckung eine in radialer Richtung verlaufende Wellenform auf. Die beiden Randabschnitte 4'b des Formelementes 4' sind ausschließlich mit dieser Wellenform strukturiert. Diese insbesondere gleichmäßige, sinusförmige oder sinusformähnliche Welle erstreckt sich über mindestens 1,5 Wellenlängen λ₁', insbesondere zwei Wellenlängen λ₁', wobei eine Wellenlänge λ₁', 20 % bis 50 % der größten in radialer Richtung vorliegenden Höhe des Formelementes 4' entspricht und beispielsweise 4,0 mm bis 4,5 mm, insbesondere 4,25 mm, beträgt. Die Wellenform besitzt eine Amplitude a₁' von 0,8 mm bis 1,2 mm, insbesondere von 1,0 mm.

Der Einschnitt 4 verläuft somit in radialer Richtung über zumindest 70% seiner radialen Erstreckung in einer Wellenform, entsprechend der Wellenform des Formelementes 4' und mit einer Wellenlänge λ₁ von 20 % bis 50 % seiner größten in radialer Richtung vorliegenden Tiefe und mit einer Amplitude a₁ von 0,8 mm bis 1,2 mm.

Im zentralen Abschnitt 4' a des Formelementes 4' ist die in radialer Richtung vorliegende Wellenform von einer in der Erstreckungsrichtung des Formelementes 4', also in axialer Richtung, verlaufenden Zick-Zack-Welle überlagert. Eine Zick-Zack-Welle unterscheidet sich von der bereits beschriebenen sinusförmigen oder sinusformähnliche Welle dadurch, dass ihre Abschnitte weitgehend gerade verlaufen und die Wellentäler bzw. -berge spitzer gestaltet sind. Beim gezeigten Ausführungsbeispiel ist jeweils bei einem der seitlichen Abschnitte 4'b beginnend ein zick-zack-wellenförmig verlaufender Bereich aus mindestens eineinhalb Wellenlängen λ₂' vorgesehen, wobei sich zwischen den beiden zick-zack-wellenförmig verlaufenden Bereichen ein in axialer Richtung verlaufender Verbindungsabschnitt 7' genau in der Mitte des Formelementes 4' befindet. Die Länge 1' des Verbindungsabschnitt 7' beträgt 4,5 mm bis 5,0 mm, die Wellenlänge λ₂' 8,0 mm bis 11,0 mm. Die Amplitude a₂' der Zick-Zack-Wellenform beträgt 0,8 mm bis 1,2 mm, insbesondere 1,0 mm. Zum Randelement 5' ist ein Übergangsabschnitt 8' ausgebildet, in welchem die Wellenformen kontinuierlich verschwinden.

Im zentralen Abschnitt 4a des Einschnittes 4 ist daher entsprechend der Ausgestaltung des Formelementes 4' die bereits beschriebene in radialer Richtung vorliegende Wellenform von einer in axialer Richtung vorliegenden Zick-Zack-Welle entsprechend der Zick-Zack-Welle des Formelementes 4' überlagert. Die Amplitude a₂ und die Wellenlänge λ₂ entsprechen von ihren Größen der Wellenlänge λ₂' und der Amplitude a₂'. In der Einschnittmitte befindet sich ein in Draufsicht in axialer Richtung und gerade verlaufender Verbindungsabschnitt 7 (Fig. 1) auf. Auch im Einschnitt 4 verschwindet die Zick-Zack-Welle in einem Übergangsabschnitt 8 zum gerundeten Einschnittgrund 5.

Die Einschnitte 4 sind daher mit Einschnittwänden versehen, die Flächenelemente aufweisen, die eine besonders vorteilhafte gegenseitige Abstützung bei unterschiedlichen Belastungen bewirken, insbesondere wird die Steifigkeit der Profilrippe bzw. der Profilblöcke der Rippe mit derartigen Einschnitten erhöht. Damit geht ein geringerer und gleichzeitig regelmäßiger Abrieb des Laufstreifens einher. Vor allem vermeidet das gegenseitige Abstützen der Einschnittwände ein ungünstig großes Öffnen der Einschnitte in Umfangsrichtung, wodurch die Umfangssteifigkeit erhöht ist. Nachdem die Beweglichkeit der Profilrippe eingeschränkt ist, wird die ansonsten mit einer größeren Beweglichkeit verbundene Geräuschemission deutlich unterdrückt. Im Inneren des Einschnittes nahe des Einschnittgrundes verschwinden die Strukturen, sodass bei fortgeschrittenem Abrieb des Laufstreifens die ohnehin schon höhere Steifigkeit ausgeglichen wird. Der gerundete Einschnittgrund reduziert weiter die Gefahr des Entstehens von Einrissen in diesem diesbezüglich heiklen Bereich. Vor allem die in radialer Richtung vorliegende Wellenform verhindert zudem ein Eindringen von Steinen in den Einschnitt.

### Bezugsziffernliste

- 1: Profilrippe
- 2: Querrille
- 3: Profilblock
- 4: Einschnitt
- 4': Formelement
- 4a, 4'a: zentraler Abschnitt
- 4b, 4'b: seitlicher Abschnitt
- 5': Randelement
- 5: Einschnittgrund
- 6, 6': Randabschnitt
- 7, 7': Verbindungsabschnitt
- 8, 8': Übergangsabschnitt
- a₁, a₁': Amplitude
- a₂, a₂': Amplitude
- λ₁, λ₁': Wellenlänge
- λ₂, λ₂': Wellenlänge
- b₁, b₂, b₃, b₃': Breite
- d₁: Stärke
- d₂: Durchmesser
- l': Länge
- m: zentrale Linie
- M-M: Mittellinie

## Patentansprüche

1. Fahrzeugluftreifen, insbesondere Nutzfahrzeugreifen, mit einem Laufstreifen, welcher eine laufrichtungsgebunden ausgeführte Profilierung mit in Umfangsrichtung umlaufenden schulterseitigen und mittleren Profilrippen aufweist, wobei zumindest eine der mittleren Profilrippen (1), welche insbesondere eine entlang des Reifenäquators verlaufende Profilrippe ist, in axialer Richtung von Einschnitten (4) mit einer Breite (b₁) von 0,5 mm bis 1,2 mm durchquert ist, welche jeweils einen zentralen Abschnitt (4a), in welchem der Einschnitt (4) in seiner Erstreckungsrichtung in Wellenform verläuft, und zwei seitliche Abschnitte (4b) aufweisen,
wobei sich die Einschnitte (4) in Draufsicht in Bogenform und bezüglich der Mittellinie der Profilrippe (1) symmetrisch erstrecken und in den seitlichen Abschnitten (4b) sowie im zentralen Abschnitt (4a) eine einheitliche und in radialer Richtung verlaufende Wellenform aufweisen, welche lediglich im zentralen Abschnitt (4a) der Einschnitte (4) von der in der Erstreckungsrichtung der Einschnitte (4) vorliegenden Wellenform überlagert ist,
**dadurch gekennzeichnet,**
**dass** die in der Erstreckungsrichtung des Einschnittes (4) vorliegende Wellenform aus zwei zick-zack-förmig verlaufenden Bereichen besteht, die in der Einschnittmitte mittels eines sich in Draufsicht in axialer Richtung und gerade erstreckenden Verbindungsabschnittes (7) miteinander verbunden sind.

2. Fahrzeugluftreifen nach Anspruch 1, **dadurch gekennzeichnet, dass** der zentrale Abschnitt (4a) des Einschnittes (4) 50 % bis 80 % seiner Erstreckungslänge einnimmt.

3. Fahrzeugluftreifen nach Anspruch 1 oder 2, **dadurch gekennzeichnet, dass** die in radialer Richtung vorliegende Wellenform über zumindest 70% der radialen Erstreckung des Einschnittes (4) verläuft.

4. Fahrzeugluftreifen nach einem der Ansprüche 1 bis 3, **dadurch gekennzeichnet, dass** die in radialer Richtung vorliegende Wellenform sinusförmig oder sinusformähnlich ist.

5. Fahrzeugluftreifen nach einem der Ansprüche 1 bis 4, **dadurch gekennzeichnet, dass** die in der Erstreckungsrichtung des Einschnittes (4) vorliegende Wellenform zick-zack-förmig ist.

6. Fahrzeugluftreifen nach einem der Ansprüche 1 bis 5, **dadurch gekennzeichnet, dass** die in radialer Richtung vorliegende Wellenform eine kleinere, insbesondere um mindestens 30% und um bis zu 60% kleinere, Wellenlänge (λ₁) aufweist als die in der Erstreckungsrichtung des Einschnittes (4) vorliegende Wellenform.

7. Fahrzeugluftreifen nach einem der Ansprüche 1 bis 6, **dadurch gekennzeichnet, dass** die in radialer Richtung vorliegende Wellenform eine Wellenlänge (λ₁) aufweist, welche 20 % bis 50 % der größten in radialer Richtung vorliegenden Tiefe des Einschnittes (4) beträgt.

8. Fahrzeugluftreifen nach einem der Ansprüche 1 bis 7, **dadurch gekennzeichnet, dass** die in der Erstreckungsrichtung des Einschnittes (4) vorliegende Wellenform eine Wellenlänge (λ₂) aufweist, welche 8,0 mm bis 11,0 mm beträgt.

9. Fahrzeugluftreifen nach einem der Ansprüche 1 bis 8, **dadurch gekennzeichnet, dass** die in radialer Richtung vorliegende Wellenform und die in der Erstreckungsrichtung des Einschnittes (4) vorliegende Wellenform jeweils eine Amplitude (a₁, a₂) aufweisen, welche 0,8 mm bis 1,2 mm, insbesondere etwa 1,0 mm, beträgt.

10. Fahrzeugluftreifen nach einem der Ansprüche 1 bis 9, **dadurch gekennzeichnet, dass** die in radialer Richtung vorliegende Wellenform und die in der Erstreckungsrichtung des Einschnittes (4) vorliegende Wellenform gleichmäßige Wellenformen sind.

11. Fahrzeugluftreifen nach einem der Ansprüche 1 bis 10, **dadurch gekennzeichnet, dass** der Einschnitt (4) einen im Querschnitt runden, insbesondere kreisbogenförmig gerundeten, Einschnittgrund (5) aufweist, welcher in Draufsicht auf den Einschnitt (4) entlang bzw. gemäß der Bogenform des Einschnittes (4) verläuft und im Querschnitt eine größte Breite (b₂) bzw. einen größten Durchmesser aufweist, welcher größer ist als die sonstige Breite (b₁) des Einschnittes (4).

12. Fahrzeugluftreifen nach Anspruch 11, **dadurch gekennzeichnet, dass** die größte Breite (b₂) bzw. der größte Durchmesser des Einschnittgrundes (5) im Querschnitt 1,0 mm bis 4,0 mm beträgt.

13. Fahrzeugluftreifen nach einem der Ansprüche 1 bis 12, **dadurch gekennzeichnet, dass** der Einschnitt (4) ausgehend von der Laufstreifenperipherie einen in radialer Richtung verlaufenden Randabschnitt (6) mit einer in radialer Richtung vorliegenden Breite (b₃) von 1,5 mm bis 2,5 mm aufweist.

14. Fahrzeugluftreifen nach einem der Ansprüche 1 bis 13, **dadurch gekennzeichnet, dass** Einschnitt (4) zum gerundeten Einschnittgrund (5) einen Übergangsabschnitt (8) aufweist, in welchem die Wellenformen verschwinden.

## Claims

1. Pneumatic vehicle tire, in particular utility vehicle tire, having a tread which has a directional profiling with shoulder-side and middle profile ribs running in a circumferential direction, wherein at least one of the middle profile ribs (1), which is in particular a profile rib running along the tire equator, is traversed in an axial direction by sipes (4) with a width (b₁) of 0.5 mm to 1.2 mm, each of which has a central portion (4a), in which the sipe (4) runs with an undulation in the extent direction thereof, and two lateral portions (4b),
wherein the sipes (4) extend, in plan view, in an arc shape and symmetrically with respect to the mid-line of the profile rib (1), and, in the lateral portions (4b) and in the central portion (4a), have a uniform undulation running in a radial direction, which is overlapped only in the central portion (4a) of the sipes (4) by the undulation that is present in the extent direction of the sipes (4),
**characterized in that**
the undulation present in the extent direction of the sipe (4) is composed of two zigzag-shaped regions which, in the middle of the sipe, are connected to one another by means of a connecting portion (7) which extends in a straight line in an axial direction as seen in plan view.

2. Pneumatic vehicle tire according to Claim 1, **characterized in that** the central portion (4a) of the sipe (4) covers 50% to 80% of the extent length of said sipe.

3. Pneumatic vehicle tire according to Claim 1 or 2, **characterized in that** the undulation present in the radial direction runs over at least 70% of the radial extent of the sipe (4).

4. Pneumatic vehicle tire according to any one of Claims 1 to 3, **characterized in that** the undulation present in the radial direction is sinusoidal or similar to a sinusoidal shape.

5. Pneumatic vehicle tire according to any one of Claims 1 to 4, **characterized in that** the undulation present in the extent direction of the sipe (4) is zigzag-shaped.

6. Pneumatic vehicle tire according to any one of Claims 1 to 5, **characterized in that** the undulation present in the radial direction has a wavelength (λ₁) that is smaller, in particular by at least 30% and by up to 60%, than that of the undulation present in the extent direction of the sipe (4).

7. Pneumatic vehicle tire according to any one of Claims 1 to 6, **characterized in that** the undulation present in the radial direction has a wavelength (λ₁) that is 20% to 50% of the greatest depth of the sipe (4) present in the radial direction.

8. Pneumatic vehicle tire according to any one of Claims 1 to 7, **characterized in that** the undulation present in the extent direction of the sipe (4) has a wavelength (λ₂) of 8.0 mm to 11.0 mm.

9. Pneumatic vehicle tire according to any one of Claims 1 to 8, **characterized in that** the undulation present in the radial direction and the undulation present in the extent direction of the sipe (4) each have an amplitude (a₁, a₂) of 0.8 mm to 1.2 mm, in particular approximately 1.0 mm.

10. Pneumatic vehicle tire according to any one of Claims 1 to 9, **characterized in that** the undulation present in the radial direction and the undulation present in the extent direction of the sipe (4) are uniform undulations.

11. Pneumatic vehicle tire according to any one of Claims 1 to 10, **characterized in that** the sipe (4) has a sipe base (5) which is rounded, in particular rounded in a circular arc shape, in cross section and which, as seen in a plan view of the sipe (4), extends along or in accordance with the arc shape of the sipe (4) and which, in cross section, has a greatest width (b₂) or a greatest diameter which is greater than the width (b₁) of the rest of the sipe (4).

12. Pneumatic vehicle tire according to Claim 11, **characterized in that** the greatest width (b₂) or the greatest diameter of the sipe base (5) in cross section is 1.0 mm to 4.0 mm.

13. Pneumatic vehicle tire according to any one of Claims 1 to 12, **characterized in that** the sipe (4) has, proceeding from the tread periphery, an edge section (6) which runs in the radial direction and which has a width (b₃) present in the radial direction of 1.5 mm to 2.5 mm.

14. Pneumatic vehicle tire according to any one of Claims 1 to 13, **characterized in that** the sipe (4) has a transition portion (8) to the rounded sipe base (5), in which transition portion the undulations disappear.

## Revendications

1. Pneumatique de véhicule, notamment pneumatique de véhicule utilitaire, avec une bande de roulement qui présente un profilage réalisé de manière directionnelle avec des nervures profilées centrales et du côté de l'épaulement s'étendant dans la direction périphérique, au moins l'une des nervures profilées centrales (1), qui est notamment une nervure profilée s'étendant le long de l'équateur du pneu, étant traversée dans la direction axiale par des entailles (4) ayant une largeur (b₁) de 0,5 mm à 1,2 mm, qui présentent chacune une section centrale (4a), dans laquelle l'entaille (4) s'étend sous forme ondulée dans sa direction d'extension, et deux sections latérales (4b),
les entailles (4) s'étendant, en vue de dessus, en forme d'arc et symétriquement par rapport à la ligne médiane de la nervure profilée (1) et présentant, dans les sections latérales (4b) ainsi que dans la section centrale (4a), une forme ondulée uniforme et s'étendant dans la direction radiale, qui est superposée, uniquement dans la section centrale (4a) des entailles (4), à la forme ondulée présente dans la direction d'extension des entailles (4),
**caractérisé en ce que**
la forme ondulée présente dans la direction d'extension de l'entaille (4) est constituée de deux zones s'étendant en forme de zigzag, qui sont reliées l'une à l'autre au centre de l'entaille au moyen d'une section de liaison (7) s'étendant, en vue de dessus, dans la direction axiale et en ligne droite.

2. Pneumatique de véhicule selon la revendication 1, **caractérisé en ce que** la section centrale (4a) de l'entaille (4) occupe 50 % à 80 % de sa longueur d'extension.

3. Pneumatique de véhicule selon la revendication 1 ou 2, **caractérisé en ce que** la forme ondulée présente dans la direction radiale s'étend sur au moins 70 % de l'extension radiale de l'entaille (4).

4. Pneumatique de véhicule selon l'une quelconque des revendications 1 à 3, **caractérisé en ce que** la forme ondulée présente dans la direction radiale est sinusoïdale ou analogue à sinusoïdale.

5. Pneumatique de véhicule selon l'une quelconque des revendications 1 à 4, **caractérisé en ce que** la forme ondulée présente dans la direction d'extension de l'entaille (4) est en forme de zigzag.

6. Pneumatique de véhicule selon l'une quelconque des revendications 1 à 5, **caractérisé en ce que** la forme ondulée présente dans la direction radiale présente une longueur d'onde (λ₁) plus petite, notamment plus petite d'au moins 30 % et de jusqu'à 60 %, que la forme ondulée présente dans la direction d'extension de l'entaille (4).

7. Pneumatique de véhicule selon l'une quelconque des revendications 1 à 6, **caractérisé en ce que** la forme ondulée présente dans la direction radiale présente une longueur d'onde (λ₁) qui représente 20 % à 50 % de la profondeur maximale de l'entaille (4) présente dans la direction radiale.

8. Pneumatique de véhicule selon l'une quelconque des revendications 1 à 7, **caractérisé en ce que** la forme ondulée présente dans la direction d'extension de l'entaille (4) présente une longueur d'onde (λ₂) qui est de 8,0 mm à 11,0 mm.

9. Pneumatique de véhicule selon l'une quelconque des revendications 1 à 8, **caractérisé en ce que** la forme ondulée présente dans la direction radiale et la forme ondulée présente dans la direction d'extension de l'entaille (4) présentent chacune une amplitude (a₁, a₂) qui est de 0,8 mm à 1,2 mm, notamment d'environ 1,0 mm.

10. Pneumatique de véhicule selon l'une quelconque des revendications 1 à 9, **caractérisé en ce que** la forme ondulée présente dans la direction radiale et la forme ondulée présente dans la direction d'extension de l'entaille (4) sont des formes ondulées de même dimension.

11. Pneumatique de véhicule selon l'une quelconque des revendications 1 à 10, **caractérisé en ce que** l'entaille (4) présente un fond d'entaille (5) de section transversale ronde, notamment arrondie en forme d'arc de cercle, qui, en vue de dessus sur l'entaille (4), s'étend le long ou selon la forme d'arc de l'entaille (4) et présente en section transversale une largeur maximale (b₂) ou un diamètre maximal qui est supérieur à l'autre largeur (b₁) de l'entaille (4).

12. Pneumatique de véhicule selon la revendication 11, **caractérisé en ce que** la largeur maximale (b₂) ou le diamètre maximal du fond d'entaille (5) en section transversale est de 1,0 mm à 4,0 mm.

13. Pneumatique de véhicule selon l'une quelconque des revendications 1 à 12, **caractérisé en ce que** l'entaille (4) présente, en partant de la périphérie de la bande de roulement, une section de bord (6) s'étendant dans la direction radiale avec une largeur (b₃) présente dans la direction radiale de 1,5 mm à 2,5 mm.

14. Pneumatique de véhicule selon l'une quelconque des revendications 1 à 13, **caractérisé en ce que** l'entaille (4) présente, vers le fond d'entaille arrondi (5), une section de transition (8) dans laquelle les formes ondulées disparaissent.
